(19) Europäisches Patentamt
European Patent Office
Office européen des brevets

(11) **EP 2 577 095 B1**

(12) **EUROPÄISCHE PATENTSCHRIFT**

(45) Veröffentlichungstag und Bekanntmachung des Hinweises auf die Patenterteilung:
**07.01.2015 Patentblatt 2015/02**

(21) Anmeldenummer: **11730191.1**

(22) Anmeldetag: **30.05.2011**

(51) Int Cl.:
*F16H 1/16* (2006.01)   *F16H 57/02* (2012.01)
*B66C 23/84* (2006.01)   *E02F 9/12* (2006.01)
*F24J 2/54* (2006.01)   *B66F 11/04* (2006.01)
*F03D 11/00* (2006.01)   *F16C 19/18* (2006.01)
*F16H 57/039* (2012.01)

(86) Internationale Anmeldenummer:
**PCT/EP2011/002658**

(87) Internationale Veröffentlichungsnummer:
**WO 2011/151046 (08.12.2011 Gazette 2011/49)**

(54) **SCHWENKTRIEB**

SWIVEL DRIVE

ENTRAÎNEMENT PIVOTANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.06.2010 DE 102010022476**

(43) Veröffentlichungstag der Anmeldung:
**10.04.2013 Patentblatt 2013/15**

(73) Patentinhaber: **IMO Holding GmbH**
**91350 Gremsdorf (DE)**

(72) Erfinder:
• **VÖLLNER, Martin**
**91315 Höchstadt (DE)**

• **FRANK, Hubertus**
**91315 Höchstadt (DE)**
• **KLINNER, Uwe**
**91301 Forchheim (DE)**

(74) Vertreter: **Küchler, Stefan**
**Patentanwalt**
**Färberstrasse 20**
**90402 Nürnberg (DE)**

(56) Entgegenhaltungen:
WO-A1-93/22584     WO-A1-2005/031190
CN-A- 101 476 615     CN-Y- 201 232 734
FR-A1- 2 885 663     GB-A- 2 034 612
SU-A1- 631 436     US-A- 5 834 662

**Beschreibung**

Die Erfindung richtet sich auf einen sog. Schwenktrieb, d.h. auf eine Vorrichtung zum Drehantrieb eines Maschinen- oder Anlagen-Teiles, beispielsweise eines Kranes, einer Hubarbeitsbühne, eines nachführbaren Photovoltaik-Aggregats oder eines Heliostaten od. dgl. Gerätschaft zur Nachführung von Spiegeln im Rahmen eines Solarthermie-Kraftwerks, etc., gegenüber einem Fundament oder einem Chassis, beispielsweise eines Schwerlastfahrzeugs, oder gegenüber einem anderen Maschinen- oder Anlagen-Teil, umfassend ein Schneckengetriebe, mit einem Gehäuse, welches eine Anschlußfläche zum Anschluß an einem Maschinen- oder Anlagenteil, Chassis oder Fundament aufweist, mit einer Schnecke, die manuell oder von einem Antriebsmotor in Drehung versetzbar ist, und mit einem Schneckenrad, welches im Gehäuse drehbar gelagert ist, indem zu beiden Seiten der zum Eingriff mit der Schnecke vorgesehenen Verzahnung des Schneckenrades wenigstens je eine Wälzlagerung vorgesehen ist, und welches eine Anschlußfläche zum Anschluß an einem Maschinen- oder Anlagenteil, Chassis oder Fundament aufweist, die durch eine zentrale Ausnehmung des Gehäuses hindurch zugänglich ist.

Das Gehäuse einer gattungsgemäßen Schwenkvorrichtung dient einerseits der Lagerung des Schneckenrades und der Schnecke mittels Wälzlagern; andererseits soll es den Verzahnungsbereich des Schneckenrades und der Schnecke sowie die Wälzlager möglichst vollständig umschließen und dadurch bspw. das Eindringen von Schmutz und sonstigen Partikeln verhindern. Zu diesem Zweck haben bekannte Gehäuse beispielsweise ein Basisteil mit einer Grundfläche in Form eines "D", wobei die Schnecke parallel zu der Sekante des "D" verläuft. Ein Querschnitt durch die Mantelfläche dieses Basisteils hat ebenfalls eine etwa "D"-förmige Gestalt; darauf wird nach Einbau von Schnecke und Schneckenrad ein Deckel aufgesetzt und mit dem Basisteil verschraubt. Zwar ist in dem Basisteil und dem Deckel je eine Ausnehmung vorgesehen, wodurch das Schneckenrad zum Anschluß an ein Maschinen- oder Anlagenteil zugänglich ist; diese Ausnehmungen sind jedoch nicht groß genug, um die Verzahnung des Schneckenrades inspizieren zu können. Bei einer Inspektion der Schneckenrad-Verzahnung muß dafür zunächst der Deckel demontiert werden, was - infolge der gegenseitigen Durchdringung - unmöglich ist, solange das Schneckenrad mit einem angeschlossenen Maschinen- oder Anlagenteil verbunden ist.

Die CN 101 476 615 A offenbart eine gattungsgemäße Anordnung, wobei allerdings das Gehäuse aus einem Ω-förmigen Teil besteht, woran ein die Schnecke aufnehmender Ansatz angeschraubt ist. Außerdem sind auch hier an dem Gehäuse ober- und unterseitige Deckel vorhanden, die bei einer Demontage zunächst abzuschrauben sind. Somit ist hier kein leichter Zugang zum Innenraum eines solchen Schwenktriebs möglich.

Ähnliches gilt auch für das US-Patent US 5,834,662 und auch für die SU 631 436 A1, wo das mehrteilige Gehäuse vor jeder Demontage zunächst zerlegt werden muss.

Bei der WO 93/22584 A1 ist zwar ein Schneckengetriebe offenbart; das dortige Schneckenrad weist jedoch keine ebene, ringförmige Anschlussfläche auf, sondern eine mit einer Längsnut versehene Innenfläche und ist damit allenfalls an einer Welle festlegbar, jedoch nicht an einem beliebigen Maschinen- oder Anlagenteil, Chassis oder Fundament.

Aus den Nachteilen des beschriebenen Standes der Technik resultiert das die Erfindung initiierende Problem, eine gattungsgemäße Vorrichtung zum Drehantrieb eines ersten Maschinen- oder Anlagenteils gegenüber einem weiteren Maschinen- oder Anlagenteil, Fundament, Chassis od. dgl. derart weiterzubilden, dass - bspw. für eine Inspektion der Schneckenradverzahnung - eine Demontage des Gehäuses mit einem möglichst geringen Aufwand durchgeführt werden kann.

Die Lösung dieses Problems gelingt dadurch, dass jedenfalls der zur Schwenkachse des Schwenktriebs konzentrische Bereich des Gehäuses einstückig ausgebildet ist, wobei der kleinste Innendurchmesser des Gehäuses größer ist als der größte Außendurchmesser des Schneckenrades, und wobei das Gehäuse und/oder das Schneckenrad als Gußteil hergestellt ist (sind).

Diese Maßnahme zielt darauf ab, einen Deckel völlig zu vermeiden, so dass eine Demontage des Gehäuses nicht zunächst das Entfernen eines Deckels erfordert.

Vielmehr lassen sich die beiden Teile - Gehäuse einerseits und Schneckenrad andererseits - in axialer Richtung, bezogen auf die Schwenkachse des erfindungsgemäßen Schwenktriebs, auseinanderziehen, ggf. nach vorheriger Entfernung von Teilen der (Wälz-) Lagerung. Bei einem Gußteil kann auch wenigstens ein seitlicher Ansatz zur Aufnahme (je) einer Schnecke integriert, d.h. angeformt sein. Derart komplexe Formen können als Gußteil mit geringem Material- und Arbeitsaufwand angefertigt werden.

Es hat sich als günstig erwiesen, dass das Schneckenrad eine zentrale Ausnehmung aufweist. Durch eine solche Ausnehmung kann die Masse und damit auch das Gewicht einer erfindungsgemäßen Vorrichtung reduziert werden.

Wenn die zentrale Ausnehmung das Schneckenrad vollständig durchsetzt, lassen sich dort im eingebauten Zustand ggf. Kabel oder andere Leitungen von einem Fundament, Chassis od. dgl. zu einem verschwenkenden Anlagenteil führen.

Es liegt im Rahmen der Erfindung, dass die Innenseite der zentralen Ausnehmung in dem Schneckenrad einem konischen Verlauf folgt. Eine derartige Gestalt begünstigt das Entformen eines als Gußteil hergestellten Rohlings.

Bevorzugt sind die Laufbahnen des Schneckenrades für die Wälzkörper aus dem selben Grundkörper hergestellt wie dessen Verzahnung. Dadurch kann der Herstellungsprozess weiter vereinfacht werden.

Die Verzahnung des Schneckenrades läßt sich an den Querschnitt der Schnecke anpassen. Dies ist insbesondere der Fall bei einem sog. Globoid-Schneckenrad, dessen verzahnte Bezugsfläche einem Globoid entspricht, also einer Fläche, die durch Rotation eines ebenen Kreisbogens um eine Achse entsteht, welche in der selben Ebene liegt wie der erzeugende Kreisbogen selbst.

Die Erfindung sieht weiterhin vor, dass die minimale Querschnittsfläche des Schneckenrades im Zahneingriffsbereich kleiner ist als seine Anschlußfläche. Eine solche Anordnung ergibt sich insbesondere im Fall einer Globoid-Verzahnung, wenn dieselbe in die rundumlaufende Stirnseite des Schneckenrades vertieft eingearbeitet ist, und hat den Vorteil, dass sich bei einem maximal festen Anschluß an ein Mascchinen- oder Anlagenteil nur ein minimaler Platzbedarf ergibt.

Andererseits sollten die Anschlußfläche(n) des Schneckenrades und/oder des Gehäuses eben sein, weil sich ebene Flächen mit höchster Präzision herstellen lassen und daher ein besonders inniger Kontakt mit einem hohen Reibungsbeiwert erzielen läßt.

Die Anschlußflächen des Schneckenrades und des Gehäuses sollten in zueinander parallelen Ebenen liegen, damit beide gleichermaßen von der Drehachse des Lagers lotrecht durchsetzt werden.

Zur Herstellung einer stabilen Verbindung mit einem anzuschließenden Maschinen- oder Anlagenteil oder einem Fundament oder Chassis sieht die Erfindung In der Anschlußfläche des Schneckenrades und/oder des Gehäuses kranzförmig verteilte Befestigungselemente vor. Diese Befestigungselemente an einer, beiden oder allen Anschlußflächen können als Durchgangsbohrungen ausgebildet sein oder als mit einem Innengewinde versehene Sacklochbohrungen. Wenn sich dabei der Grund einer derartigen Sacklochbohrung auf Höhe einer Wälzkörperreihe befindet, ist in den meisten Fällen ein optimaler Kompromiß aus minimaler Bauhöhe des erfindungsgemäßen Schwenktriebs und maximaler mechanischer Stabilität desselben gefunden.

Die Erfindung zeichnet sich weiterhin aus durch zwei Schrägwälzlager, insbesondere zwei Schrägkugellager, welche nach Art eines Doppel-Schrägwälzlagers, vorzugsweise eines Doppel-Schrägkugellagers angeordnet sind. Vorzugsweise sind diese beiden Wälzlagerungen gegeneinander verspannt, so dass sich bei einer wechselnden axialen Belastung keinerlei Relativverschiebung zwischen Schneckenrad und Gehäuse ergibt.

Die Laufbahnen der Wälzlager sollten gehärtet sein, insbesondere oberflächengehärtet. Hierfür bietet sich induktives Härten an, aber auch Flammhärten, etc. Die Erfindung bevorzugt dabei Vorschubhärten oder schlupfloses Härten. Auch eine Nitrierung ist möglich sowie eine Kombination derartiger behandlungen.

Erfindungsgemäß werden die Wälzkörper bzw. Kugeln an äquidistanten Positionen gehalten durch einen Käfig oder mehrere Käfigsegmente. Dabei kann der Käfig oder die Käfigsegmente eine flächige, kammartige Struktur aufweisen, wobei die freien Enden der Kamm-Zinken beider Wälzlager aufeinander zu weisen. Ein solcher Käfig kann nachträglich durch den Lagerspalt eingebracht und auf dem selben Wege auch wieder entfernt werden, ohne dass dazu das Lager bzw. der erfindungsgemäße Schwenktrieb zerlegt werden muß. Damit ein solcher Käfig oder ein solches Käfigsegment sich nicht versehentlich lösen kann, können seine Kamm-Zinken Hinterschneidungen aufweisen, welche einen Wälzkörper bis jenseits von dessen Äquator umgreifen und also regelrecht auf die Wälzkörper aufgeschnappt werden, um dort sodann formschlüssig gehalten zu werden.

Eine weitere Konstruktionsvorschrift der Erfindung sieht vor, dass die minimale, lichte Spaltweite $W_{min}$ zwischen der Außenfläche des Schneckenrades und der Innenfläche des Gehäuses im zusammengebauten Zustand gleich oder größer ist als der halbe Durchmesser D eines Wälzkörpers: $W_{min} \geq D/2$. Dadurch wird erreicht, dass sich - vor dem Einfüllen der Wälzkörper - das Schneckenrad gegenüber dem Gehäuse exzentrisch verschieben läßt, und zwar mindestens um einen Wert D/2. Dadurch öffnet sich der Spalt an einem Umfangsbereich auf einen Maximalwert $W_{max} \geq D$, und an dieser Stelle können die Wälzkörper sodann nachträglich in die dortigen Laufbahnen eingefüllt werden, ohne dass dazu eine eigene Einfüllöffnung erforderlich wäre.

Damit die Wälzlagerungen und die Verzahnung innerhalb des Spalt-Hohlraums dauerhaft geschmiert werden können, sollte der Spalt zwischen dem Gehäuse und dem Schneckenrad an beiden Lagerstirnseiten abgedichtet sein.

Dabei kann wenigstens eine derartige Dichtung als Wellendichtring, insbesondere als Radialwellendichtring ausgebildet sein. Dies hat den Vorteil, dass er nachträglich ohne großen Aufwand ein- und bei Bedarf auch wieder ausgebaut werden kann.

Zur Steigerung der Abdichtwirkung kann wenigstens eine Dichtung über eine Dichtlippe verfügen, die mittels eines rundum laufenden Spanndrahtes fest an die betreffende Dichtungsanlauffläche gepreßt wird. Ein solcher Spanndraht kann die Anpreßwirkung der Dichtlippe beträchtlich erhöhen, so dass unter Umständen sogar ein flüssiges Schmiermittel wie Öl verwendet werden kann.

Es hat sich bewährt, das Gehäuse als Gußteil herzustellen, so dass bspw. ein seitlicher Ansatz an dem Gehäuse zur Aufnahme der Schnecke in einem einzigen Arbeitsgang mit hergestellt werden kann.

Zur leichteren Entformung eines derartigen Gußteils kann man der äußeren Mantelfläche des das Schneckenrad umschließenden Gehäuses eine konische Gestalt erteilen, ggf. mit angesetzten Versteifungsrippen und/oder mit einem rundumlaufenden Flansch im Bereich der Anschlußfläche.

Es liegt im Rahmen der Erfindung, dass In einem seitlichen Gehäuseansatz eine Schnecke mittels Wälzlagern gelagert ist, bspw. mittels Rollen- und/oder Kugellagern.

Die Erfindung bietet die Möglichkeit einer Nachstellung bzw. Minimierung des Zahnflankenspiels zwischen Schneckenrad und Schnecke. Damit soll einem vorzeitigen Verschleiß der Schneckenradverzahnung begegnet werden, wie er ansonsten durch wiederholtes Aufeinanderschlagen der miteinander in Eingriff stehenden Zahn- bzw. Gewindebereiche verursacht würde.

Eine derartige Minimierung des Zahnflankenspiels läßt sich dadurch erreichen, dass sich die Geometrie der Schnecke und/oder des Schneckengewindes in deren Längsrichtung ändert. Bspw. könnte die Schnecke eine leicht konische oder kegelige Grundgestalt aufweisen, so dass sich je nach Verschiebestellung der Schnecke in deren Längsrichtung ihr Gewindeeingriffsbereich mehr oder weniger weit in die Zahnlücken des Schneckenrades hinein erstreckt.

In Weiterverfolgung dieses Gedankens gelangt die Erfindung jedoch zu einer Anordnung, wobei sich der Abstand zwischen den Flanken des Schneckengewindes entlang der Längsrichtung der Schnecke ändert, insbesondere gemäß einem Duplex-Schneckengewinde. Infolge der geringfügig unterschiedlichen Gewindesteigungen ändert sich die Zahnbreite bzw. die Breite der Gewindeerhebung der Schnecke entlang von deren Längsrichtung. Eine derartige Anordnung hat bessere Eigenschaften als die zuvor beschriebene Kegelgestalt der Schnecke, weil sich der Abstand der ineinander eingreifenden Getriebeteile nicht verändert und daher ein Klemmen nicht zu befürchten ist.

Schließlich entspricht es der Lehre der Erfindung, dass die Position der Schnecke in deren Längsrichtung veränderbar ist. Dies kann bspw. dadurch erfolgen, dass die Position der Schnecke nur an einer offenen Stirnseite des Schneckenansatzes an dem Gehäuse eingestellt wird, während an dem gegenüber liegenden Schneckenende nur eine reine Radiallagerung vorgesehen ist, ohne axial wirkende Kraftkomponente. Demgegenüber ist an dem antriebsseitigen Ende der Schnecke, wo dieselbe aus dem Gehäuse austritt, eine kombiniert Radial- und Axiallagerung vorgesehen, bspw. in Form einer ein- oder mehrreihigen Schräglagerung, vorzugsweise in Form eines Doppel-Schrägwälzlagers, insbesondere eines Doppel-Schrägkugellagers. Zwischen dessen Montagehalterung und dem Gehäuse selbst können dann ein oder mehrere Unterlegscheiben bzw. Distanzringe platziert werden, um die Position der Schnecke in deren Längsrichtung zu variieren. Dies kann bereits erstmalig bei der Herstellung erfolgen, indem das Arbeitspersonal zunächst die optimale Position der Schnecke für eine spielfreie Getriebepaarung versuchsweis ermittelt und dann die passende Distanzscheibe auswählt und einbaut. Später kann diese Prozedur nach jedem Wartungs- oder Inspektionsintervall wiederholt werden.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:

Fig. 1     eine Draufsicht auf einen erfindungsgemäßen Drehantrieb;

Fig. 2     eine Seitenansicht auf die Fig. 1;

Fig. 3     einen Schnitt quer durch den Drehantrieb entlang der Linie III-III aus Fig. 2;

Fig. 4     einen Schnitt durch die Fig. 1 entlang der Linie IV-IV;

Fig. 5     das Detail V aus Fig. 4 in einer vergrößerten Darstellung; sowie

Fig. 6     das Detail VI aus Fig. 4 in einer der Fig. 5 entsprechenden Darstellung.

Die erfindungsgemäße Vorrichtung 1 zum Drehantrieb eines Maschinen- oder Anlagenteils gegenüber einem Fundament oder Chassis oder einem anderen Anlagenteil weist einen besonders einfachen Aufbau auf, nämlich ein Gehäuse 2, worin eine Schnecke 3 und ein Schneckenrad 4 drehbar gelagert sind.

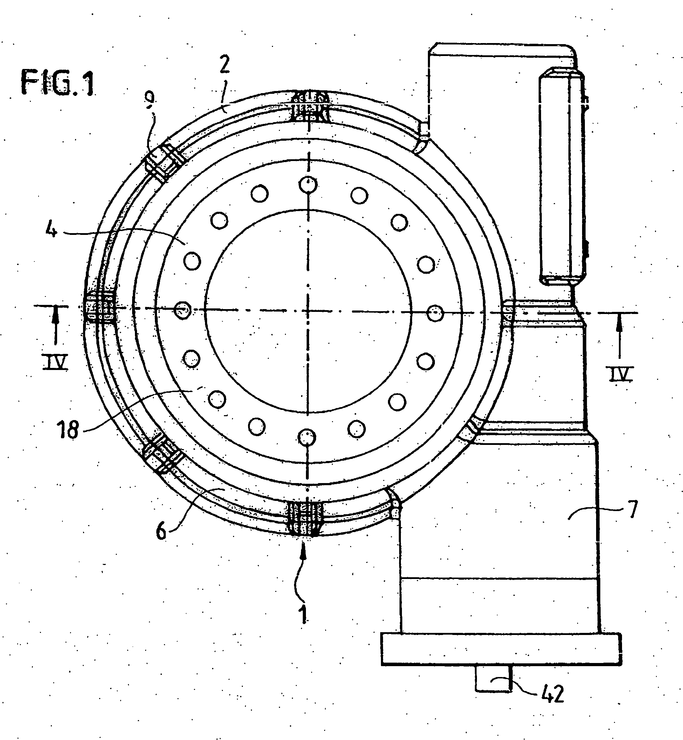

Die Draufsicht auf das Gehäuse 2 gemäß Fig. 1 zeigt dessen zwei Hauptabschnitte, nämlich einen ersten, ringförmigen, zur Schwenkachse 5 der Drehantriebsvorrichtung 1 konzentrischen Gehäuseabschnitt 6 zur Aufnahme des Schneckenrades 4 sowie einen zweiten, etwa tangential zu dem ersten Gehäuseabschnitt 6 verlaufenden, zweiten, gerade gestreckten Gehäuseabschnitt 7 zur Aufnahme der Schnecke 3.

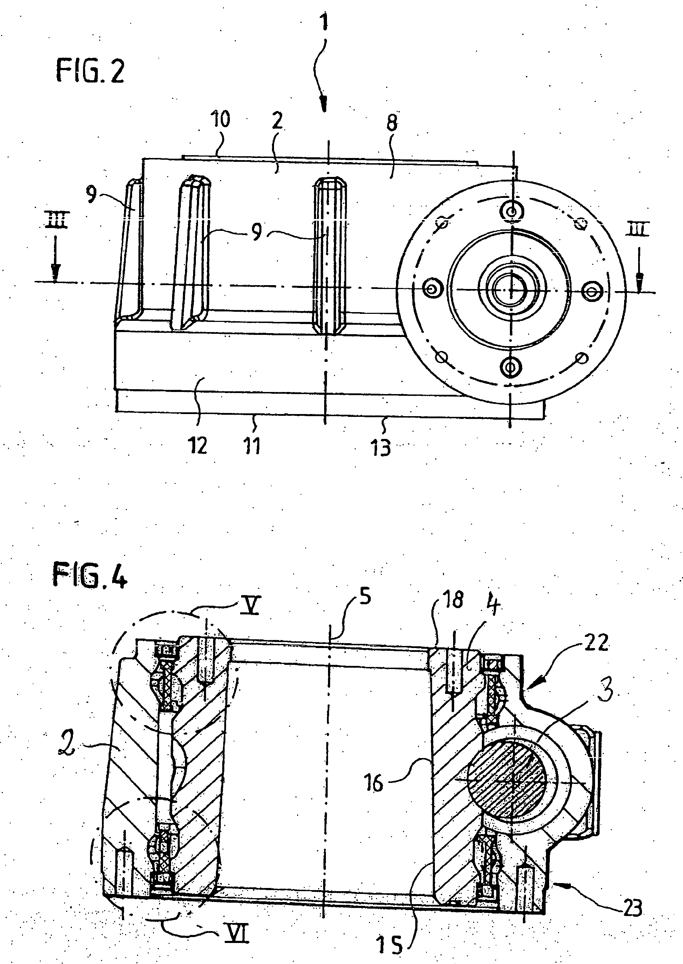

Die Schnittdarstellung in Fig. 4 läßt den Aufbau des ringförmigen Gehäuseabschnitts 6 erkennen: Dieser hat eine hülsenförmige Geometrie, im Wesentlichen ohne eine unterseitige Basis- oder Abschlußplatte und ohne einen oberseitigen Deckel. Als Abweichung von einer rein zylindermantelförmigen Geometrie sind an der äußeren Mantelfläche 8 einige zur Schwenkachse parallele Versteifungsrippen 9 erkennbar, welche sich von der oberen Lagerstirnseite 10 bis zur unteren Lagerstirnseite 11 querschnittlich radial leicht erweitern und an der unteren Lagerstirnseite 11 in einer rundum laufenden, flanschartigen Verbreiterung 12 enden. Dank dieser Versteifungsrippen kann die Stärke des eigentlichen, ringförmigen Gehäusemantels 6 minimiert werden.

Wie man in Fig. 2 weiter sieht, dient eine Stirnseite des ringförmigen Gehäuseabschnitts 6, vorzugsweise diejenige mit der rundum laufenden, flanschartigen Verbreiterung 12, als ebene Anschlußfläche 13, woran ein Anlagen- oder Maschinenteil, Fundament, Chassis od. dgl. angeschlossen werden kann. Zur Verbindung mit einem solchen Anlagenteil, etc. dienen mehrere, in dieser Anschlußfläche 13 kranzförmig verteilt eingebrachte, zu der Schwenkachse 5 der Drehantriebsvorrichtung 1 parallele Bohrungen, insbesondere Sacklochbohrungen 14 mit Innengewinde. Um diese Sacklochbohrungen 14 aufzunehmen, ist die zu der Schwenkachse 5 parallele Erstreckung der rundum laufenden, flanschartigen Verbreiterung 12 größer als die Tiefe der Sacklochbohrungen 14, bspw. anderthalb mal so groß oder größer.

Das Schneckenrad 4 verfügt über eine zentrale, zu der Schwenkachse 5 konzentrische Ausnehmung 15 und verfügt somit ebenfalls über eine hülsenförmige Geometrie ohne gravierende radiale Erhöhungen oder Vertiefungen in seiner inneren oder äußeren Mantelfläche 16, 17. Die innenliegende Mantelfläche 16 ist leicht konisch, was die Herstellung des Schneckenrades als Gußteil und dabei insbesondere dessen Entformbarkeit begünstigt. Dabei liegt der verjüngte Bereich der zentralen Ausnehmung 15 im zusammengebauten Zustand bevorzugt der flanschartigen Verbreiterung 12 des ringförmigen Gehäuseabschnitts 6 in axialer Richtung gegenüber - also an der gegenüber liegenden Lagerstirnseite - und trägt eine ebene Stirnfläche, die als Anschlußfläche 18 für ein Anlagenteil, etc., dient. Zur Verbindung mit einem Anlagenteil, etc. weist diese Anschlußfläche 18 mehrere, kranzförmig um die Schwenkachse 5 verteilt angeordnete Bohrungen auf, insbesondere zu der Schwenkachse 5 parallele Sacklochbohrungen 19 jeweils mit einem Innengewinde. Die Tiefe der Sacklochbohrungen 19 in dem Schneckenrad 4 entspricht vorzugsweise etwa der Tiefe der Sacklochbohrungen 14 in dem ringförmigen Gehäuseabschnitt 6.

Das Schneckenrad 4 hat etwa die selbe achsparallele Erstreckung wie das Gehäuse 2, ist allerdings gegenüber diesem in axialer Richtung geringfügig verschoben, so dass jeweils die betreffende Anschlußfläche 13, 18 über die Stirnseite des jeweils anderen Elements - Schneckenrad 4 bzw. Gehäuse 2 - leicht übersteht, so dass bei der Verbindung mit einer ebenen Anschlußfläche eines Anlagenteils, etc. ein Entlangstreifen des demgegenüber verdrehbaren Teils 4, 2 ausgeschlossen ist.

Zwischen der Innenseite 20 des ringförmigen Gehäuseteils 6 einerseits und der äußeren Mantelfläche 17 des Schneckenrades 4 besteht ein Spalt 21, so dass sich diese Teile gegeneinander verdrehen können.

Zur verdrehbaren Lagerung des Schneckenrades 4 innerhalb des ringförmigen Gehäuseabschnittes 6 sind in dem Spalt 21 zwei Wälzlager 22, 23, von denen eines nahe der oberen Lagerstirnseite 10, das andere im Bereich der unteren Lagerstirnseite 11 angeordnet ist.

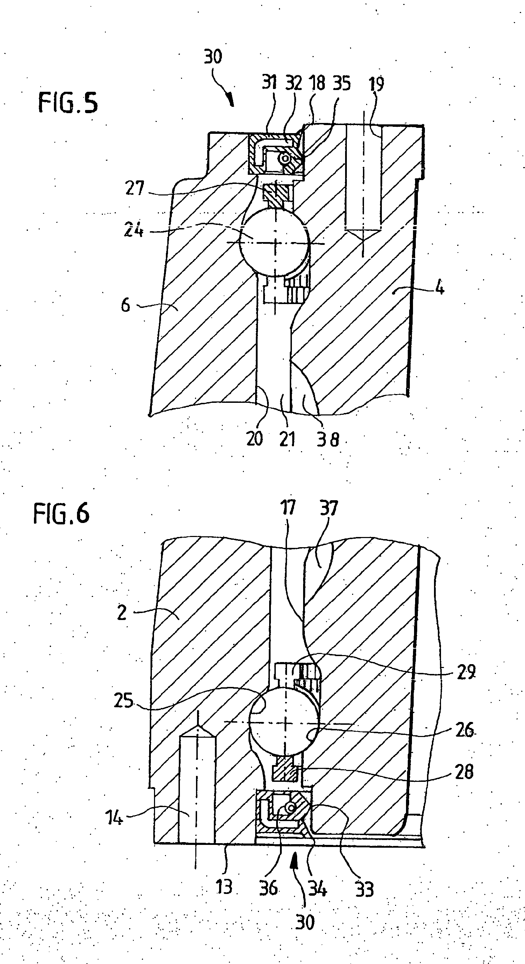

Die Wälzlager 22, 23 sind in den Fig. 5, 6 hervorgehoben dargestellt, um den inneren Aufbau besser erkennen zu können. Da die beiden Wälzlager 22, 23 eine im wesentlichen identische Struktur aufweisen, können sie im folgenden gemeinsam beschrieben werden:

In beiden Fällen handelt es sich um Kugellager, also um Wälzlager 22, 23 mit kugelförmigen Wälzkörpern 24 mit einem Durchmesser D. Beide Wälzlager 22, 23 sind Schrägwälzlager bzw. Schrägkugellager mit einem Betrag des Tragwinkels $|\alpha|$ von 20° oder mehr, bspw. von etwa 45°. Die Tragwinkel $\alpha$ beider Schrägkugellager 22, 23 sind einander entgegengesetzt, also einmal positiv, einmal negativ, also vorzugsweise $\pm\alpha$, so dass das eine Lager 22 axiale Druckkräfte, das andere Lager 23 axiale Zugkräfte aufnehmen kann. Ferner sind die beiden Schrägkugellager 22, 23 gegeneinander vorgespannt, so dass sich mangels eines Spiels in axialer Richtung bei Lastwechseln zwischen axialer Zug- und Druckbeanspruchung keine Relativbewegung zwischen Schneckenrad 4 und Gehäuse 2 ergibt.

Eine Besonderheit der Lager 22, 23 ist, dass die Laufbahnen 25, 26 direkt in den (gegossenen) Grundkörper des betreffenden Elements - Gehäuse 2 oder Schneckenrad 4 - eingearbeitet sind, insbesondere eingefräst. Ferner sind diese Laufbahnen 25, 26 vorzugsweise oberflächengehärtet, um der erheblichen Belastung durch vielmaliges Überrollen seitens der kugelförmigen Wälzkörper 24 über einen möglichst langen Zeitraum hinweg ohne erkennbare Verschleißerscheinungen ertragen zu können.

Die Weite W des Spaltes 21 kann in axialer Richtung variieren, wie aus Fig. 4 ersichtlich ist. Jedoch ist die minimale Spaltweite $W_{min}$ entlang des gesamten Spaltes 21 mindestens gleich oder größer dem halben Durchmesser D eines Wälzkörpers 24:

$$W_{min} \geq D/2.$$

Dadurch ist sichergestellt, dass das Schneckenrad 4 innerhalb des Gehäuses 2 um mindestens d/2 exzentrisch verschoben werden kann, solange die Wälzkörper 24 noch nicht in dem Spalt 21 positioniert sind. Durch eine derartige Verlagerung öffnet sich der Spalt 21 an einer Seite: $W \geq D/2 + D/2 = D$, während er sich in dem diametral gegenüber liegenden Bereich verschließt: $W = D/2 - D/2 = 0$. Nun können an der maximal geöffneten Stelle des Spaltes 21 die Wälzkörper 24 bis in den Bereich der Laufbahnen 25, 26 eingeführt werden. Ist dies geschehen, werden die Wälzkörper 24 in Umfangsrichtung verteilt, bis sie sich schließlich an äquidistanten Positionen befinden, wobei sich das Schneckenrad 4 wieder an eine zu dem ringförmigen Gehäuseabschnitt 6 konzentrische Position begibt. An diesen äquidistanten Positionen werden die Wälzkörper 24 schließlich gehalten durch einen Käfig 27 oder mehrere Käfigsegmente pro Wälzlager 22, 23. Vorzugsweise hat der Käfig 27 eine kammartige Struktur mit einem rückwärtigen Bügel oder Rücken 28 und mit nach Art der Zinken eines Kamms innerhalb einer gemeinsamen Fläche davon etwa parallel zueinander auskragenden Stegen 29.

Infolge der oben beschriebenen Einführungsprozedur ist allerdings die Zahl Z der Wälzkörper 24 pro Lager 22, 23 deutlich kleiner als der theoretische Maximalwert $Z = U/D$ mit dem Wälzkreis-Umfang U, nämlich $Z \leq 0,8 * U/D$, insbesondere $Z \leq 0,6 * U/D$. Bei $Z = ½ * U/D$ haben zwei benachbarte Wälzkörper etwa einen Abstand a in der Größenordnung ihres Durchmessers D: $a = D$. Aus diesem Grund haben die Stege 29 des Käfigs 27 eine relativ große Erstreckung in Längsrichtung des Käfigrückens 28. Dazwischen befinden sich Vertiefungen zur Aufnahme der Wälzkörper 24, welche einer Kreiskurve folgen, vorzugsweise entlang eines Zentrumswinkels von mehr als 180°, bezogen auf den Mittelpunkt des betreffenden Wälzkörpers 24. Bei einer derartigen Geometrie müssen die Stege 24 beim Aufstecken auf die vorpositionierten Wälzkörper 24 in der Lage sein, sich innerhalb ihrer Ebene zu verformen. Um dies zu ermöglichen, ist ferner vorgesehen, dass die Stege 29 des Käfigs 27 zwischen zwei benachbarten Vertiefungen zur Aufnahme je eines Wälzkörpers zumindest je einen Schlitz aufweisen, welcher dem Käfig 27 ein erhöhtes Maß an Flexibilität verleiht.

Die beiden Lager 22, 23 können sowohl mit Fett als auch mit Öl geschmiert werden, wobei zur Vermeidung von Verschleiß und Fressen das Schmiermittel metallische oder nichtmetallische Festschmierstoffe enthalten kann. Um das Schmiermittel innerhalb des Spaltes 21 zurückzuhalten und gleichzeitig vor einer Verschmutzung durch eindringenden Schmutz und sonstigen Partikeln zu schützen, ist der Spalt 21 im Bereich beider Lagerstirnseiten 10, 11 jenseits der beiden Wälzlager 22, 23 abgedichtet.

Auch diese Abdichtungen 30 können gleiche Strukturen aufweisen, was allerdings nicht zwingend ist.

Die dargestellten Abdichtungen 30 sind jeweils am Gehäuse 2 festgelegt, insbesondere innerhalb einer kehlartigen Erweiterung der dem Spalt 21 zugewandten Gehäuseinnenseite 20. Zu diesem Zweck verfügen sie jeweils über einen in dem elastischen Dichtungsmaterial 31 eingebetteten Kern 32 in Form eines Metallprofils, insbesondere mit L-förmigem Querschnitt, wobei die etwa rechtwinklig zueinander verlaufenden Schenkel dieses L-Profils 32 sich lagemäßig gegenseitig stabilisieren und gleichzeitig den rückwärtigen Bereich des elastischen Dichtmaterials 31 an die Gehäuseinnenseite 20 pressen.

Außerdem verfügt eine bzw. jede Abdichtung 30 jeweils über ein oder mehrere Dichtlippen 33, 34, welche an der äußeren Mantelfläche 17 des Schneckenrades 4 anlaufen. Die dem Spalt 21 zugewandte Haupt-Dichtlippe 33 befindet sich an einem querschnittlich etwa V-förmigen Ansatz 35 des elastischen Dichtungsmaterials 31 im Bereich des radial innen liegenden Endes des quer zur Spaltrichtung verlaufenden Schenkels des L-förmigen Kerns 32, und zwar an der dem Spalt zugewandten Flanke dieses Kernschenkels. Die Spitze des querschnittlich V-förmigen Ansatzes 35 bildet die Haupt-Dichtlippe 33 und zeigt radial nach innen zur Schwenkachse 5 hin. An der radial weiter außen liegenden Flanke bildet der V-förmige Ansatz 35 eine Kehle, worin ein Spanndraht 36 Platz findet, womit die Dichtlippe 33 zusätzlich nach innen vorgespannt wird, zu dem Schneckenrad 4 hin.

Eine zweite, äußere Dichtlippe 34 dient vor allem als Staubdichtung und soll eindringende Partikel von der Haupt-Dichtlippe 33 fern halten.

In dem Bereich der äußeren Mantelfläche 17 des Schneckenrades 4 zwischen den beiden Wälzlagern 22, 23 ist eine Außenverzahnung 37 vorgesehen mit einer rundumlaufenden Reihe von Zähnen 38 zum Eingriff mit dem Gewinde 39 der Schnecke 3. Der Bereich der Verzahnung 37 kann dabei ähnlich einem Globoidrad gestaltet sein, also wie ein Zahnrad, dessen verzahnte Bezugsfläche ein Globoid ist, also ein Rotationskörper, dessen Mantelfläche durch die Rotation eines Kreisbogens um eine in der Kreisebene liegende Achse erzeugt wird. Dies hat den Vorteil, dass ein größerer Teil eines Zahns 38 in Kontakt mit der Schnecke 3 tritt; infolge der vergrößerten Kontaktfläche lassen sich größere Kräfte bzw. Drehmomente übertragen. Allerdings könnte unter Umständen auch ein Stirnrad verwendet werden mit geraden Zähnen, sofern die damit übertragbaren Kräfte bzw. Drehmomente ausreichend sind.

Die darin eingreifende Schnecke 3 ist bevorzugt als Zylinderschnecke ausgebildet. Allerdings ist es auch möglich, eine Globoidschnecke zu verwenden, deren mit Gewinde versehene Bezugsfläche ein Globoid ist.

Ferner kann die Schnecke 3 mit einer Simplexverzahnung versehen sein, wobei die beiden Flanken der Gewindesteigung, also die in Längsrichtung der Schnecke 3 vordere und die hintere Flanke, gleiche Modulen bzw. gleiche Steigungen aufweisen, so dass sich die Querschnittsgeometrie des Gewindes in dessen Verlauf nicht ändert.

Diese Geometrie ist einfach herzustellen; allerdings besteht dabei oftmals keine Möglichkeit, das Zahnflankenspiel zu kompensieren oder einzustellen. Demgegenüber sieht die Erfindung vor, dass das Zahnflankenspiel des Schneckengetriebes, also das Spiel zwischen Schnecke 3 und Schneckenrad 4, ein- und/oder nachstellbar ist. Dies kann am elegantesten bewirkt werden durch Verwendung einer Schnecke 3 mit einer sog. Duplexverzahnung. Diese Struktur zeichnet sich dadurch aus, dass die beiden Flanken der Gewindesteigung, also die in Längsrichtung der Schnecke 3 vordere und die hintere Flanke, leicht unterschiedliche Modulen bzw. Steigungen aufweisen, so dass sich die Querschnittsgeometrie des Schneckengewindes in dessen Verlauf kontinuierlich verändert.

Durch eine Längsverschiebung der Schnecke 3 entlang ihrer Längsachse können daher Bereiche der Gewinde-Erhebung mit unterschiedlicher Breite in Eingriff mit dem Schneckenrad 4 gebracht werden, wodurch sich das Zahnflankenspiel präzise justieren läßt.

Bevorzugt befindet sich dabei der Bereich mit schmalerem Querschnitt der Gewinde-Erhebung am freien Ende 40 der Schnecke 3, also an dem nicht angetriebenen Ende der Schnecke 3. Dadurch ist es möglich, die Schnecke 3 jeweils so weit in den zylindrischen Gehäuseabschnitt 7 her einzuführen, bis das Zahnflankenspiel vollständig verschwindet, jedoch gerade noch keine erhöhte Reibung oder gar Klemmen auftritt. In dieser Position kann die Schnecke 3 dann gelagert werden.

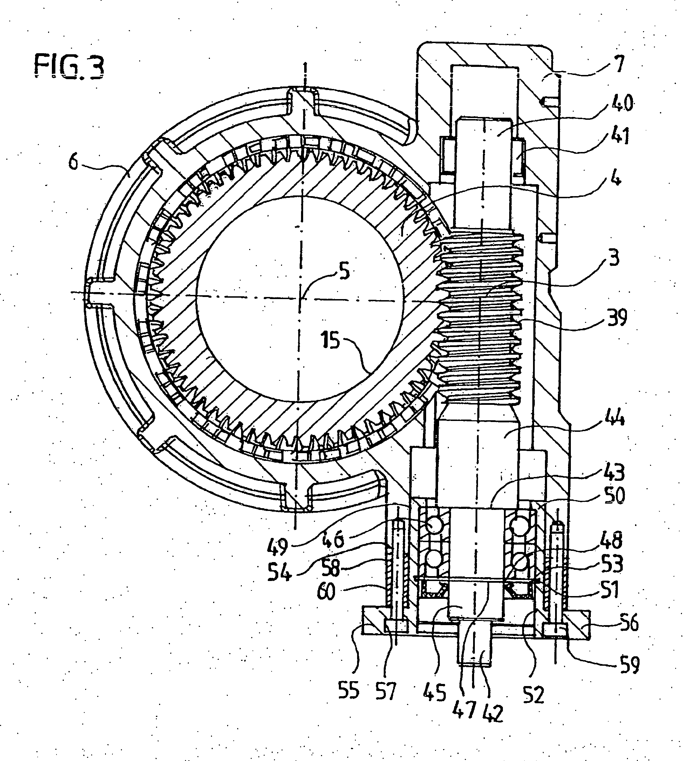

Hierzu dient die in Fig. 3 dargestellte Schneckenlagerung:

Das vordere bzw. freie Ende 40 der Schnecke 3 ist zylindrisch gestaltet und ist länger ausgeführt als das dortige Wälzlager 41, bspw. ein Nadellager. Dadurch kann die Schnecke 3 gegenüber diesem Wälzlager 41 in ihrer Längsrichtung verstellt werden.

Das rückwärtige bzw. angetriebene Ende 42 der Schnecke 3 weist eine Abstufung 43 auf zwischen einem proximalen, dickeren Bereich 44 und einem sich daran anschließenden, distalen, verjüngten Bereich 45. Auf diesen wird bis zur Anlage an der Abstufung 43 ein beispielsweise zweireihiges Wälzlager 46, bspw. ein Doppel-Schrägkugellager, aufgesteckt. In einer Flucht mit der antriebsseitigen Stirnseite dieses Wälzlagers 46 ist in einem rundumlaufenden, nut- oder rillenförmigen Einstich 47 in dem verjüngten Wellenbereich 45 ein Sicherungsring 48 eingesetzt, so dass das Wälzlager 46 in axialer Richtung unverschieblich auf der Schneckenwelle 3 festgelegt ist.

Der/die äußere(n) Ring(e) des ein- oder mehrreihigen Wälzlagers 46 ist/sind in einer Buchse 49 aufgenommen und darin auf ähnliche Weise in axialer Richtung unverschieblich fixiert. Beispielsweise verfügt die Buchse 49 zu diesem Zweck an ihrem innenliegenden Ende über einen nach innen vorspringenden Bund 50, während In einer Flucht mit der antriebsseitigen Stirnseite dieses Wälzlagers 46 ein rundumlaufender Einstich 51 an der Innenseite 52 der Buchse 49 vorgesehen ist zur Aufnahme eines zweiten Sicherungsrings 53, womit das Wälzlager 46 in axialer Richtung unverschieblich mit der Buchse 49 verbunden ist.

Diese Buchse 49 ihrerseits wird mit der offenen Stirnseite 54 des langgestreckten Gehäuseteils 7 verbunden, bspw. verschraubt. Zu diesem Zweck kann an dem peripheren bzw. außenliegenden Ende 55 der Buchse 49 ein radial nach außen vorspringender Bund 56 vorgesehen sein. Darin sind zur Längsachse der Schneckenwelle 3 parallele Befestigungsbohrungen 57 kranzförmig verteilt. Diese fluchten jeweils mit einer mit Innengewinde versehenen Sacklochbohrung 58 in der Stirnseite 54 des langgestreckten Gehäuseteils 7 und dienen zum Hindurchtritt von Befestigungsschrauben 59. Indem zwischen dem Bund 56 der Buchse 49 und der Stirnseite 54 des langgestreckten Gehäuseteils 7 unterschiedlich Dicke Abstandsringe 60 eingefügt werden, kann die axiale Position der Buchse 49 und damit auch der Schneckenwelle 3 variiert werden.

Durch die oben beschriebene Verwendung einer Duplex-Schnecke 3, bei welcher die beiden Zahnflanken des Gewindes leicht unterschiedliche Modulen bzw. Steigungen aufweisen, ergeben sich für die beiden Zahnflanken unterschiedliche Steigungswinkel, so dass sich die Zahndicke bzw. -lücke über die Schneckenverzahnungsbreite kontinuierlich verändert. Die Zahndicken und -lücken am Umfang des Schneckenrades 4 bleiben dagegen konstant. Am Schneckenrad 4 führen die unterschiedlichen Module der Schnecke 3 zu unterschiedlichen Wälzkreisdurchmessern und damit zu voneinander abweichenden Flankenformen für die Vorder- und Rückflanken.

Das Zahnflankenspiel kann so durch axiales Verschieben der Schnecke 3 auf jeden beliebigen Wert eingestellt und jederzeit feinfühlig und stufenlos nachreguliert werden, ohne dass sich die Eingriffsverhältnisse der Verzahnung 37 maßgeblich ändern. Ein ähnlicher Effekt läßt sich erreichen durch eine Schnecke 3, deren Bezugsfläche leicht kegelig geschnitten ist.

Durch die in axialer Richtung verstellbare Lagerung der Schneckenwelle kann das Drehspiel der Schnecke auch dann nachgestellt werden, wenn der Schwenktrieb 1 in einer Anlage fest eingebaut ist. Die Nachstellung erfolgt über eine verschiebbare Buchse 49 die über einen Distanzring fixiert ist, je nach Höhe des Distanzrings bzw. der Abstimmscheiben kann die Position der Schnecke 3 verändert werden.

Ferner kann die Schnecke 3 zu Kontrollzwecken entlang ihrer Längsachse aus dem Gehäuse 2 herausgenommen und/oder ersetzt werden.

Typischerweise besteht das Gehäuse 2 und/oder das Schneckenrad 4 aus einem härtbaren Gußwerkstoff, z.B. GGG-50.

Die Erfindung läßt sich auf mannigfaltige Weise weiterbilden:

Beispielsweise kann zur Lagerung des Schneckenrades 4 ein ein- oder mehrreihiges Kugel- oder Rollenlager vorgesehen sein, bevorzugt als zweireihiges Vierpunkt- oder Schrägkugellager; auch in der Variante als Rollenlager ist das Einfüllen der Wälzkörper über den Spalt 21 möglich.

Bei einem mehrreihigen Laufbahnsystem muß die Schneckenradverzahnung 37 nicht zwischen den Lager-Laufbahnen 22, 23 liegen, sondern könnte auch auf einer Seite derselben liegen.

Sind sehr hohe Lasten zu übertragen, kann das Laufbahnsystem auch über Füllbohrungen im Gehäuse 2 oder Schneckenrad 4 befüllt werden, so dass eine größere Anzahl von Wälzkörpern realisierbar ist. Die Füllbohrung wird dann mit einem Stopfen verschlossen und einem Stift oder ähnlichen gesichert. Auf diese Weise können mehr Wälzkörper eingebracht werden, die eine höhere statische und dynamische Tragfähigkeit erbringen. Die Wälzkörper werden dann über einen geeigneten Käfig oder mit Zwischenstücken auf engen Abstand gehalten.

Zur Steigerung ihrer Tragfähigkeit werden die Oberflächen der Lager-Laufbahnen 25, 26 einer Wärmebehandlung unterzogen wie Induktivhärten oder Einsatzhärten; auch Nitrieren od. dgl. ist möglich sowie auch eine Kombination aus Härten und Nitrieren.

Ferner können die Laufbahnen 25, 26 an vorzugsweise gehärteten, ringförmigen Segmenten ausgebildet sein, die in einer entsprechenden Nut oder Ausnehmung eingelegt sind. Die Einstellung des Spiels bzw. einer Vorspannung in dem Laufbahnsystem erfolgt über die Auswahl von Wälzkörpern mit entsprechendem Durchmesser, wobei in mehrreihigen Systemen für unterschiedliche Wälzkörperreihen auch unterschiedlich große Wälzkörper verwendet werden können.

Das Schneckenrad 4 trägt eine Scheckenradverzahung 37 auf seinem Umfang, die im Durchmesser auch geringfügig größer als der Außendurchmesser der übrigen Bereiche des Schneckenrades 4 sein kann. Jedoch muß auch ein ggf. erhabener Verzahnungsbereich 37 stets gleich oder kleiner sein als der Innendurchmesser des Gehäuses 2.

Zu Kontrollzwecken kann auch ein anschraubbarer Deckel am Gehäuse 2 gegenüber der Motoranschlußseite 54 vorgesehen sein. Dort könnte auch zur Erfassung Rotationen der Schnecke 3 eine Meßvorrichtung angebracht sein. Ferner wäre es möglich, zur Positionsbestimmung die am Gehäuse 2 vorbeistreichenden Zähne des Schneckenrades 4 oder andere, daran angebrachten Marken zu verwenden. Dies läßt sich zum Beispiel auf induktivem Weg bewerkstelligen mittels einer Bohrung im Gehäuse 2, worin bspw. ein induktiver Näherungsschalter angeordnet sein könnte. Solchenfalls könnten eine oder mehrere zusätzliche Marken oder speziell markierte Zähne zur Bestimmung der Nullpunktlage dienen.

Bezugszeichenliste

| | | | |
|---|---|---|---|
| 1 | Vorrichtung | 26 | Laufbahn |
| 2 | Gehäuse | 27 | Käfig |
| 3 | Schnecke | 28 | Rücken |
| 4 | Schneckenrad | 29 | Steg |
| 5 | Schwenkachse | 30 | Abdichtung |
| 6 | Gehäuseabschnitt | 31 | Dichtungsmaterial |
| 7 | Gehäuseabschnitt | 32 | Kern |
| 8 | Mantelfläche | 33 | Dichtlippe |
| 9 | Versteifungsrippe | 34 | Dichtlippe |
| 10 | Lagerstirnseite | 35 | Ansatz |
| 11 | Lagerstirnseite | 36 | Spanndraht |
| 12 | flanschartige Verbreiterung | 37 | Außenverzahnung |
| 13 | Anschlußfläche | 38 | Zahn |
| 14 | Sacklochbohrung | 39 | Gewinde |
| 15 | Ausnehmung | 40 | freies Ende |
| 16 | Mantelfläche | 41 | Wälzlager |
| 17 | Mantelfläche | 42 | angetriebenes Ende |
| 18 | Anschlußfläche | 43 | Abstufung |
| 19 | Sacklochbohrung | 44 | dicker Bereich |
| 20 | Innenseite | 45 | verjüngter Bereich |
| 21 | Spalt | 46 | Wälzlager |
| 22 | Wälzlager | 47 | Einstich |
| 23 | Wälzlager | 48 | Sicherungsring |
| 24 | Wälzkörper | 49 | Buchse |
| 25 | Laufbahn | 50 | Bund |
| 51 | Einstich | | |
| 52 | Innenseite | | |
| 53 | Sicherungsring | | |

(fortgesetzt)

| 54 | Stirnseite |
| 55 | Ende |
| 56 | Bund |
| 57 | Befestigungsbohrung |
| 58 | Sacklochbohrung |
| 59 | Befestigungsschraube |
| 60 | Abstandsring |

**Patentansprüche**

1. Vorrichtung (1) zum Drehantrieb eines Maschinen- oder Anlagen-Teiles, beispielsweise eines Kranes, einer Hubarbeitsbühne, eines nachführbaren Photovoltaik-Aggregats oder eines Heliostaten od. dgl. Gerätschaft zur Nachführung von Spiegeln im Rahmen eines Solarthermie-Kraftwerks, etc., gegenüber einem tragenden Fundament oder Chassis, beispielsweise eines Schwerlastfahrzeugs, oder gegenüber einem anderen Maschinen- oder Anlagen-Teil, umfassend ein Schneckengetriebe mit einem Gehäuse (2), welches eine Anschlußfläche zum Anschluß an einem Maschinen- oder Anlagenteil, Chassis oder Fundament aufweist, mit einer Schnecke (3), die manuell oder von einem Antriebsmotor in Drehung versetzbar ist, und mit einem Schneckenrad (4), welches im Gehäuse (2) drehbar gelagert ist, indem zu beiden Seiten der zum Eingriff mit der Schnecke (3) vorgesehenen Verzahnung des Schneckenrades (4) wenigstens je eine Wälzlagerung vorgesehen ist, und welches eine Anschlußfläche zum Anschluß an einem Maschinen- oder Anlagenteil, Chassis oder Fundament aufweist, die durch eine zentrale Ausnehmung des Gehäuses (2) hindurch zugänglich ist, **dadurch gekennzeichnet, dass** jedenfalls der zur Schwenkachse der Drehantriebsvorrichtung (1) konzentrische Bereich des Gehäuses (2) einstückig ausgebildet ist, wobei der kleinste Innendurchmesser des Gehäuses (2) größer ist als der größte Außendurchmesser des Schneckenrades (4), und wobei das Gehäuse (2) und/oder das Schneckenrad (4) als Gußteil hergestellt ist (sind).

2. Vorrichtung (1) nach Anspruch 1, **dadurch gekennzeichnet, dass** das Schneckenrad (4) eine zentrale Ausnehmung (15) aufweist, wobei die zentrale Ausnehmung (15) das Schneckenrad (4) vorzugsweise vollständig durchsetzt, und wobei bevorzugt die Innenseite (16) der zentralen Ausnehmung (15) in dem Schneckenrad (4) einem konischen Verlauf folgt.

3. Vorrichtung (1) nach einem der vorhergehenden Ansprüche, **dadurch gekennzeichnet, dass** die Laufbahnen (25,26) des Schneckenrades (4) für die Wälzkörper (24) aus dem selben Grundkörper hergestellt sind wie dessen Verzahnung (37).

4. Vorrichtung (1) nach einem der vorhergehenden Ansprüche, **dadurch gekennzeichnet, dass** die Verzahnung (37) des Schneckenrades (4) an den Querschnitt der Schnecke (3) angepaßt ist, insbesondere durch eine Ausgestaltung als Globoid-Verzahnung.

5. Vorrichtung (1) nach einem der vorhergehenden Ansprüche, **dadurch gekennzeichnet, dass** die minimale Querschnittsfläche des Schneckenrades (4) im Zahneingriffsbereich kleiner ist als seine Anschlußfläche (18).

6. Vorrichtung (1) nach einem der vorhergehenden Ansprüche, **dadurch gekennzeichnet, dass** die Anschlußfläche(n) (13,18) des Gehäuses (2) und/oder des Schneckenrades (4) eben ist (sind), wobei vorzugsweise die Anschlußfläche(n) (13,18) des Gehäuses (2) und des Schneckenrades (4) in zueinander parallelen Ebenen liegen.

7. Vorrichtung (1) nach einem der vorhergehenden Ansprüche, **dadurch gekennzeichnet, dass** in der (den) Anschlußfläche(n) (13,18) des Gehäuses (2) und/oder des Schneckenrades (4) kranzförmig verteilte Befestigungselemente zur Festlegung an einem Maschinen- oder Anlagenteil oder an einem Fundament oder Chassis vorgesehen sind, wobei vorzugsweise die Befestigungselemente an einer, beiden oder allen Anschlußflächen (13,18) als Durchgangsbohrungen ausgebildet sind oder als mit einem Innengewinde versehene Sacklochbohrungen (14,19), wobei insbesondere der Grund einer Sacklochbohrung (14,19) sich auf Höhe einer Wälzkörperreihe (24) befindet.

8. Vorrichtung (1) nach einem der vorhergehenden Ansprüche, **gekennzeichnet durch** zwei Schrägwälzlager (22,23), insbesondere zwei Schrägkugellager, welche nach Art eines Doppel-Schrägwälzlagers, vorzugsweise eines Doppel-Schrägkugellagers angeordnet sind.

9. Vorrichtung (1) nach einem der vorhergehenden Ansprüche, **dadurch gekennzeichnet, dass** die Laufbahnen (25,26) der Wälzlager (22,23) gehärtet sind, insbesondere oberflächengehärtet.

10. Vorrichtung (1) nach einem der vorhergehenden Ansprüche, **dadurch gekennzeichnet, dass** die Wälzkörper (24) bzw. Kugeln an äquidistanten Positionen gehalten werden durch einen Käfig (27) oder mehrere Käfigsegmente, wobei vorzugsweise der Käfig (27) oder die Käfigsegmente eine flächige, kammartige Struktur aufweisen, derart, dass die freien Enden der Kamm-Zinken (29) beider Wälzlager (22,23) aufeinander zu weisen.

11. Vorrichtung (1) nach einem der vorhergehenden Ansprüche, **dadurch gekennzeichnet, dass** die minimale Weite ($W_{min}$) des lichten Spaltes (21) zwischen der radial außen liegenden Stirnfläche des Schneckenrades (4) und der Innenfläche (20) des Gehäuses (2,6) gleich oder größer ist als der halbe Wert des Durchmessers (D) eines Wälzkörpers (24):

$$W_{min} \geq D/2.$$

12. Vorrichtung (1) nach einem der vorhergehenden Ansprüche, **dadurch gekennzeichnet, dass** der Spalt (21) zwischen dem Gehäuse (2,6) und dem Schneckenrad (4) an beiden Lagerstirnseiten (10,11) abgedichtet ist, wobei vorzugsweise wenigstens eine Dichtung (30) als Radialwellendichtring ausgebildet ist, und/oder wobei bevorzugt wenigstens eine Dichtung (30) über eine Dichtlippe (33) verfügt, die mittels eines rundum laufenden Spanndrahtes (36) fest an die betreffende Dichtungsanlauffläche gepreßt wird.

13. Vorrichtung (1) nach einem der vorhergehenden Ansprüche, **dadurch gekennzeichnet, dass** die äußere Mantelfläche (8) des das Schneckenrad (4) umschließenden Gehäusteils (6) einem konischen Verlauf folgt, ggf. mit angesetzten Versteifungsrippen (9) und/oder mit einer rundumlaufenden, flanschartigen Verbreiterung (12), vorzugsweise im Bereich einer Anschlußfläche (13).

14. Vorrichtung (1) nach einem der vorhergehenden Ansprüche, **dadurch gekennzeichnet, dass** an dem Gehäuse (2,6) ein seitlicher Ansatz (7) vorgesehen ist zur Aufnahme der Schnecke (3), wobei vorzugsweise die Schnecke (3) mittels Wälzlagern (41,46) in dem seitlichen Gehäuseansatz (7) gelagert ist, und/oder wobei bevorzugt die Position der Schnecke (3) innerhalb des seitlichen Gehäuseansatzes (7) in ihrer Längsrichtung veränderbar ist.

15. Vorrichtung (1) nach einem der vorhergehenden Ansprüche, **dadurch gekennzeichnet, dass** die Geometrie der Schnecke (3) und/oder des Schneckengewindes sich in Längsrichtung der Schnecke (3) ändert, wobei vorzugsweise sich der Abstand zwischen den Flanken des Schneckengewindes entlang der Längsrichtung der Schnecke (3) ändert.

**Claims**

1. Device (1) for the rotary drive of a part of a machine or a facility, for example a crane, an elevating working platform, a tracking photovoltaic assembly or a heliostat or the like equipment for tracking mirrors within the context of a solar thermal power station, etc., relative to a supporting foundation or chassis, for example of a heavy duty vehicle, or relative to another part of a machine or of a facility, comprising a worm gear mechanism having a housing (2), which has a connecting surface for connecting to a part of a machine or a facility, to a chassis or to a foundation, with a worm (3), which is rotatable manually or by means of a drive motor, and with a worm wheel (4) which is rotatably mounted in the housing (2), in that there is provided at least one rolling contact bearing on each of both sides of the toothing of the worm wheel (4) provided to engage with the worm (3), and which comprises a connecting surface for connecting to a part of a machine or a facility, to a chassis or to a foundation, which is accessible via a central opening of the housing (2), **characterized in that** at least that area of the housing (2) which is concentric to the swivel axis of the swivel drive (1), is formed in one piece, wherein the smallest internal diameter of the housing (2) is larger than the largest external diameter of the worm wheel (4), and wherein the housing (2) and/or the worm wheel (4) is fabricated as a cast part.

2. Device (1) according to claim 1, **characterized in that** the worm wheel (4) comprises a central recess (15), wherein the central recess (15) preferably traverses the worm wheel (4) entirely, and wherein preferably the inner surface (16) of the central recess (15) in the worm wheel (4) follows a conical course.

3. Device (1) according to claim 1 or 2, **characterized in that** the raceways (25, 26) of the worm wheel (4) for the rolling elements (24) are fabricated out of the same base body as its toothing (37).

4. Device (1) according to one of the preceding claims, **characterized in that** the toothing (37) of the worm wheel (4) is adapted to the cross-section of the worm (3), especially by a shaping according to an hourglass toothing.

5. Device (1) according to one of the preceding claims, **characterized in that** the minimum cross-sectional area of the worm wheel (4) in the meshing region is smaller than its connecting surface (18).

6. Device (1) according to one of the preceding claims, **characterized in that** the connecting surface(s) (13, 18) of the housing (2) and/or of the worm wheel (4) is (are) plane, whereby preferably the connecting surface(s) (13, 18) of the housing (2) and of the worm wheel (4) lie in planes parallel to one another.

7. Device (1) according to one of the preceding claims, **characterized in that** at the connecting surface(s) (13, 18) of the housing (2) and/or of the worm wheel (4), annularly distributed fixing elements are provided for the fixation to a part of a machine or a facility, to a foundation or to a chassis, whereby preferably the fixing elements at one, both or all connecting surface(s) (13, 18) are shaped as through-bores or as tapped blind holes (14,19), especially wherein the bottom of a blind hole (14, 19) is situated at the height of a row of roller elements (24).

8. Device (1) according to one of the preceding claims, **characterized by** two angular rolling contact bearings (22,23), especially two angular contact ball bearings, which are arranged in the style of a double angular rolling contact bearing, preferably in the style of a double angular contact ball bearing.

9. Device (1) according to one of the preceding claims, **characterized in that** the raceways (25, 26) of the roller bearings (22, 23) are hardened, especially surface-hardened.

10. Device (1) according to one of the preceding claims, **characterized in that** the roller elements (24) or balls respectively are held at equidistant positions by a cage (27) or by several cage segments, whereby preferably the cage (27) or the cage segments comprise a two-dimensional, comb-like structure, whereby the free ends of the comb's teeth (29) of both rolling contact bearings (22, 23) are directed vis-à-vis.

11. Device (1) according to one of the preceding claims, **characterized in that** the minimum width ($W_{min}$) of the clear gap (21) between the radially outer end face of the worm wheel (4) and the inner surface (20) of the housing (2, 6) is equal to or greater than half the value of the diameter (D) of a roller element (24):

$$W_{min} \geq D/2.$$

12. Device (1) according to one of the preceding claims, **characterized in that** the gap (21) between the housing (2, 6) and the worm wheel (4) is sealed at both end faces (10, 11) of the rolling contact bearing, wherein preferably at least one sealing (30) is designed as a radial shaft seal, and/or whereby preferably at least one sealing (30) comprises a sealing lip (33), which is pressed against the regarding thrust surface by means of a circumferential tension wire (36).

13. Device (1) according to one of the preceding claims, **characterized in that** the outer lateral surface (8) of the housing part (6) surrounding the worm wheel (4) follows a conical course, possibly with attached stiffening ribs (9) and/or with a circumferential, flange-like extension (12), preferably in the area of a connecting surface (13).

14. Device (1) according to one of the preceding claims, **characterized in that** a lateral projection (7) is provided at the housing (2, 6) for receiving the worm (3), whereby preferably the worm (3) is pivoted within the lateral housing projection (7) by means of rolling contact bearings (41, 46), and/or wherein preferably the position of the worm (3) within the lateral housing projection (7) is variable in its longitudinal direction.

15. Device (1) according to one of the preceding claims, **characterized in that** the geometry of the worm (3) and/or of the worm thread varies in the longitudinal direction of the worm (3), wherein preferably the distance between the flanks of the worm thread varies along the longitudinal direction of the worm (3).

**Revendications**

1. Dispositif (1) d'entraînement rotatif d'un élément de machine ou d'installation, par exemple d'une grue, d'une plate-forme élévatrice, d'un groupe photovoltaïque orientable ou d'un héliostat ou d'appareillage similaire pour l'orientation de miroirs dans le cadre d'une centrale thermique solaire, etc., par rapport à une fondation porteuse ou un châssis, par exemple d'un véhicule poids lourd, ou par rapport à un autre élément de machine ou d'installation, comprenant un engrenage à vis sans fin avec un carter (2) qui présente une surface de raccordement pour le raccordement à un élément de machine ou d'installation, châssis ou fondation, comportant une vis sans fin (3) qui peut être déplacée manuellement ou par rotation par un moteur d'entraînement, et comportant une roue de vis sans fin (4) qui est montée à rotation dans le carter (2), en prévoyant des deux côtés de la denture de la roue de vis sans fin (4) prévue pour l'engrènement avec la vis sans fin (3) au moins respectivement un palier à roulement, et lequel présente une surface de raccordement pour le raccordement à un élément de machine ou d'installation, châssis ou fondation qui est accessible par un évidement central du carter (2) **caractérisé en ce que**, en tout cas, la zone concentrique du carter (2) vers l'axe de pivotement du dispositif d'entraînement rotatif (1) est réalisée en une pièce, où le plus petit diamètre intérieur du carter (2) est supérieur au plus grand diamètre extérieur de la roue de vis sans fin (4), et où le carter (2) et/ou la roue de vis sans fin (4) est (sont) réalisé(s) sous forme de pièce coulée.

2. Dispositif (1) selon la revendication 1, **caractérisé en ce que** la roue de vis sans fin (4) présente un évidement central (15), où l'évidement central (15) traverse de préférence entièrement la roue de vis sans fin (4), et où en priorité la face intérieure (16) de l'évidement central (15) est de forme conique dans la roue de vis sans fin (4).

3. Dispositif (1) selon l'une des revendications précédentes, **caractérisé en ce que** les chemins de roulement (25, 26) de la roue de vis sans fin (4) pour les corps de roulement (24) sont réalisés à partir du même corps de base comme sa denture (37).

4. Dispositif (1) selon l'une des revendications précédentes, **caractérisé en ce que** la denture (37) de la roue de vis sans fin (4) est adaptée à la section de la vis sans fin (3), en particulier par une réalisation sous forme de denture globique.

5. Dispositif (1) selon l'une des revendications précédentes, **caractérisé en ce que** la surface de section minimale de la roue de vis sans fin (4) dans la zone d'engrènement des dents est inférieure à sa surface de raccordement (18).

6. Dispositif (1) selon l'une des revendications précédentes, **caractérisé en ce que** la (les) surface(s) de raccordement (13, 18) du carter (2) et/ou de la roue de vis sans fin (4) est (sont) plane(s), où de préférence la (les) surface(s) de raccordement (13, 18) du carter (2) et de la roue de vis sans fin (4) sont situées dans des plans parallèles l'un par rapport à l'autre.

7. Dispositif (1) selon l'une des revendications précédentes, **caractérisé en ce que** des éléments de fixation disposés sous forme de couronne sont prévus dans la (les) surface(s) de raccordement (13, 18) du carter (2) et/ou de la roue de vis sans fin (4) pour la fixation sur un élément de machine ou d'installation ou sur une fondation ou un châssis, où de préférence les éléments de fixation sont réalisés comme alésages traversant sur une, deux ou toutes les surfaces de raccordement (13, 18) ou comme alésages borgnes (14, 19) comportant un filetage intérieur, où en particulier la base d'un alésage borgne (14, 19) se trouve à la hauteur d'une rangée de corps de roulement (24).

8. Dispositif (1) selon l'une des revendications précédentes, **caractérisé en ce que** deux roulements à contact oblique (22, 23), en particulier deux roulements à billes à contact oblique, lesquels sont disposés sous forme d'un roulement à deux rangées à contact oblique, de préférence sous forme d'un roulement à deux rangées de billes à contact oblique.

9. Dispositif (1) selon l'une des revendications précédentes, **caractérisé en ce que** les chemins de roulement (25, 26) des roulements (22, 23) sont trempés, en particulier à surface trempée.

10. Dispositif (1) selon l'une des revendications précédentes, **caractérisé en ce que** les corps de roulement (24) ou les billes sont maintenues à des positions équidistantes par une cage (27) ou plusieurs segments de cage, où de préférence la cage (27) ou les éléments de cage présentent une structure plane, en forme de peigne, telle que les extrémités libres des dents de peigne (29) des deux roulements (22, 23) sont dirigées l'une vers l'autre.

11. Dispositif (1) selon l'une des revendications précédentes, **caractérisé en ce que** la largeur minimale ($W_{min}$) de

l'interstice intérieur (21) entre la face frontale extérieure radiale de la roue de vis sans fin (4) et la face intérieure (20) du carter (2, 6) est égale ou supérieure à la moitié de la valeur du diamètre (D) d'un corps de roulement (24) :

$$W_{min} \geq D/2.$$

12. Dispositif (1) selon l'une des revendications précédentes, **caractérisé en ce que** l'interstice (21) entre le carter (2, 6) et la roue de vis sans fin (4) est étanchéifié sur les deux faces frontales de palier (10, 11), où de préférence au moins un joint (30) est réalisé sous forme de joint à lèvre, et/ou en priorité au moins un joint (30) dispose d'une lèvre d'étanchéité (33) qui est fixée par pression sur la surface d'arrêt d'étanchéité concernée au moyen d'un fil tendeur (36) faisant le tour de la circonférence.

13. Dispositif (1) selon l'une des revendications précédentes, **caractérisé en ce que** la surface enveloppe extérieure (8) de la partie de carter (6) entourant la roue de vis sans fin (4) a une forme conique, le cas échéant, avec des rainures raidisseuses (9) rapportées et/ou avec un élargissement (12) circonférentiel en forme de bride, de préférence dans la zone d'une surface de raccordement (13).

14. Dispositif (1) selon l'une des revendications précédentes, **caractérisé en ce qu'**un épaulement latéral (7) est prévu sur le carter (2, 6) pour la réception de la vis sans fin (3), où de préférence la vis sans fin (3) est logée au moyen de roulements (41, 46) dans l'épaulement de carter latéral (7), et/ou en priorité la position de la vis sans fin (3) est modifiable dans son sens longitudinal à l'intérieur de l'épaulement de boîtier latéral (7).

15. Dispositif (1) selon l'une des revendications précédentes, **caractérisé en ce que** la géométrie de la vis sans fin (3) et/ou du filetage de vis sans fin varie dans le sens longitudinal de la vis sans fin (3), où de préférence la distance entre les flancs du filetage de vis sans fin varie suivant le sens longitudinal de la vis sans fin (3).

FIG.1

FIG.2

FIG.4

FIG.3

FIG.5

FIG.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 101476615 A
- US 5834662 A
- SU 631436 A1
- WO 9322584 A1